# EUROPEAN PATENT SPECIFICATION

(11) **EP 1 655 578 B1**
(45) Date of publication and mention of the grant of the patent: **28.09.2011**
(21) Application number: 05023164.6
(22) Date of filing: 24.10.2005
(51) Int. Cl.: G01C 21/36, G08G 1/0968

(54) **Voice guidance method of travel route in navigation system**
Sprachführungsverfahren für eine Fahrtroute in einem Navigationssystem
Procédé de guidage vocal d'itinéraire dans un système de navigation

(30) Priority: 04.11.2004 KR 2004089183
(43) Date of publication of application: 10.05.2006
(73) Proprietor: LG Electronics Inc., Seoul 150-721 (KR)
(72) Inventor: Kim, Su Jin, Gwanak-gu, Seoul 151-801 (KR)
(74) Representative: Thum, Bernhard

(56) References cited:
- US-A- 5 410 486
- US-A- 5 835 881
- PATENT ABSTRACTS OF JAPAN vol. 1997, no. 11, 28 November 1997 (1997-11-28) & JP 09 196695 A (MATSUSHITA ELECTRIC IND CO LTD), 31 July 1997 (1997-07-31)
- PATENT ABSTRACTS OF JAPAN vol. 016, no. 147 (P-1336), 13 April 1992 (1992-04-13) -& JP 04 001898 A (SUMITOMO ELECTRIC IND LTD), 7 January 1992 (1992-01-07)
- PATENT ABSTRACTS OF JAPAN vol. 018, no. 555 (P-1816), 21 October 1994 (1994-10-21) & JP 06 201391 A (MASPRO DENKOH CORP), 19 July 1994 (1994-07-19)

## Description

### BACKGROUND OF THE INVENTION

### 1. Field of the invention

The present invention relates to audio guidance method of travel route in a navigation system, and more particularly to a voice guidance method of travel route in a navigation system adapted to output all the voice guidance before a mobile object passes a predetermined guidance object point.

### 2. Description of the prior art

Concomitant with the increase of the number of mobile objects such as vehicles and the like, traffic congestion is worsened. Particularly, there arises an aggravated problem in that increase of the number of mobile objects is faster than that of the expansion of infrastructures of roads and the like.

One of the solutions to address the traffic congestion is a navigation system.

Generally, a navigation system is such that at least four or more navigation messages are received by a Global Positioning System (GPS) receiver out of navigation messages periodically transmitted by a plurality of GPS satellites arranged on geostationary orbits over the Earth to detect 3D location coordinates of a mobile object. The location coordinates detected by the GPS receiver are determined as a current location of a mobile object, and the detected current location of the mobile object is map-matched on a digital map so that the digital map and the location of the mobile object can be displayed on a display screen.

Furthermore, if there is positioned a cross section in front of a traveling mobile object, or there is located a guidance object location such as a highway, or a leading route to an interchange of a highway or a freeway, a guidance voice signal is outputted to guide a travel direction at a related guidance object location.

A user of a mobile object uses the navigation system to enable to check a current location of the mobile object and a shortest route from the current location to a destination. Furthermore, a travel route on which a mobile object is to travel can be searched in advance in response to a guidance of the navigation system, and a user of the mobile object is guided along the searched travel route by a screen and a voice signal to thereby enable to effectively use a given road.

In guiding a travel route of a mobile object by way of guidance voice signal according to the prior art, if a guidance object location is located within a preset distance of a traveling forward direction of the mobile object, a guidance voice signal is outputted to guide a travel route of a related guidance object location.

In the prior art, a voice guidance signal begins to be outputted when a mobile object passes a preset location in front of guidance object location regardless of a traveling speed of the mobile object and a time consumed for outputting the voice guidance signal.

As a result, an output of a voice guidance signal can be completed before a mobile object passes a guidance object location if a traveling speed of the mobile object is slow, or the length of a voice guidance signal is short to enable to reduce a time consumed for outputting a voice guidance signal, such that a user of the mobile object can steer the mobile object precisely to a traveling forward direction at a guidance object location in response to the voice guidance signal.

However, if the travel speed of a mobile object is fast, or it takes a long time to output a voice guidance signal because of lengthened voice guidance signal, an output of a voice guidance signal is finished after a mobile object has passed a relevant guidance object location, such that a user of the mobile object cannot be precisely guided on the travel direction of the mobile object at the relevant guidance object location disabling the mobile object from being guided to a precise direction.

One of the measures to address the afore-mentioned problem, there is disclosed a Korean Patent Application No.1996-61934 (Laid-Open No. 1998-43951), in which a current travel speed of a mobile object is detected, a location for starting to output a voice guidance signal in response to the detected current travel speed of the mobile object is adjusted and the voice guidance signal is outputted.

However, even in the prior art disclosed in the above Korea Patent Application, a time to be consumed for outputting a voice guidance signal was not considered, and the time for outputting said signal was adjusted only in response to a travel speed of the mobile object.

There arises a problem therefore in that, if a voice guidance signal is long, output of the voice guidance signal is not yet finished by the time the mobile object passes a relevant guidance object location. For that reason, a user of the mobile object is not accurately guided at a relevant guidance object location and frequently misdirected to an unwanted direction.

Document US 5,835,881 concerns a portable system for providing voice driving directions. The system determines a route between an origin and a destination using an electronic map. The system prepares driving instructions based on the route and uses an estimated speed of travel, a predetermined driver's reaction time, a time for speaking the driving instruction message and a time for positional error to provide the instructions in advance of a turn.

Document US 5,410,486 concerns a navigation system for guiding a vehicle by voice. The system includes means for calculating a guide point for executing a route guide depending on the running situation detected by detecting means.

### SUMMARY OF THE INVENTION

The present invention is disclosed to solve the aforementioned problems and it is an object of the present invention to provide a voice guidance method of travel route in navigation system configured to adjust a start location for outputting a voice guidance signal in response to a time for outputting the voice guidance signal, a travel speed of a mobile object and a relevant guidance object location relative to the searched guidance object location, such that output of the voice guidance signal can be finished before the mobile object passes a predetermined guidance object location to thereby allow a use of the mobile object to precisely steer the mobile object to a wanted direction. To achieve these objects and other advantages, there is provided a voice guidance method of travel route in a navigation system having the features of claim 1.

In accordance with one aspect of the invention, as embodied and broadly described herein, a voice guidance method of travel route in navigation system comprises: discriminating a current location of a mobile object to search for a guidance object location, detecting a current travel speed of the mobile object, calculating a distance in which the mobile object travels at the current travel speed during an output consumed time of the voice guidance signal relative to the searched guidance object location, determining an output start location for starting an output of the voice guidance signal using the calculated distance and outputting the voice guidance signal relative to the relevant guidance object location when the mobile object passes the determined output start location,
wherein the determining step of the output start location further comprises: determining an output completion location of the voice guidance signal predetermined relative to the guidance object location by the searched guidance object location and the voice guidance signal to be outputted; discriminating a current travel speed of a mobile object and a time consumed for outputting a voice guidance signal; calculating a travel distance the mobile object can travel during the output consuming time by multiplying the discriminated current travel speed of the mobile object by the output consuming time; and determining as an output start position of the voice guidance signal a location where the calculated travel distance of the mobile object is added by an output finish position of the voice guidance signal predetermined relative to the guidance object location.

In accordance with another aspect of the invention, the voice guidance method of travel route in navigation system comprises: discriminating a current location of the mobile object to guide the mobile object to travel along a searched route when the mobile object moves and searching a guidance object location; using a time to be consumed for outputting a voice guidance signal, a current travel speed of the mobile object and a relevant guidance object location relative to the searched guidance object location to determine an output start location of the voice guidance signal; and outputting the voice guidance signal relative to the relevant guidance object location when the mobile object passes the determined output start location.

The start location of the mobile object may be established by a current location of the mobile object searched by a mixed navigation method using navigation messages received by a GPS receiver and a travel state detection signal of the mobile object detected by a sensor installed at the mobile object

Furthermore, the start location and a destination of the mobile object may be established by locations inputted by a user via an instruction input unit

The discrimination of the current location of the mobile object is made by a location searched by the mixed method using navigation messages received by a GPS receiver and a travel state detection signal of the mobile object detected by a sensor installed at the mobile object, and the search of the guidance object location is to search one of the guidance object locations situated nearest to a forward location of the mobile object from the current location out of a plurality of guidance object locations located on the searched travel route.

### BRIEF DESCRIPTION OF THE DRAWINGS

The accompanying drawings, which are included to provide a further understanding of the invention and are incorporated in and constitute a part of this application, illustrative embodiments of the invention and together with the described serve to explain the principle of the invention. In the drawings:
FIG.1 is a block diagram illustrating a navigation system in which a voice guidance method according to the present invention is shown;
FIG.2 is a signal flow chart illustrating a voice guidance method according to the present invention; and
FIG.3 is a schematic drawing illustrating a start position of outputting a guidance voice signal according to present invention.

### DETAILED DESCRIPTION OF THE INVENTION

Reference will now be made in detail to the preferred embodiments of the present invention, examples of which are illustrated in the accompanying drawings wherever possible, and the same reference numerals will be used throughout the drawings to refer to the same or like parts or portions.

Hereinafter, a voice guidance method of travel route in navigation system according to the present invention will be described.

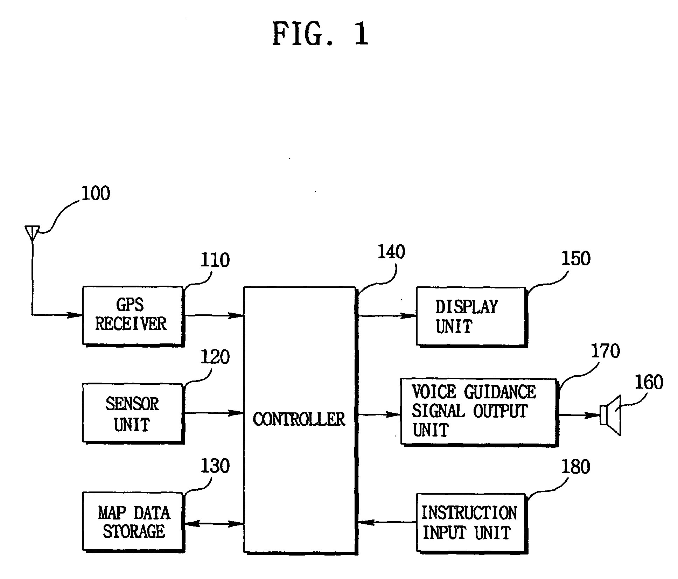

FIG.1 is a block diagram illustrating a navigation system in which a voice guidance method according to the present invention is shown.

Referring FIG.1, the navigation system includes a GPS (Global Positioning System) receiver (110) for receiving navigation messages transmitted by GPS satellites via an antenna (100), a sensor (120) installed at a gyroscope and a speed sensor of a mobile object for detecting a travel state of the mobile object, a map data storage (130) for storing a map data in advance, a controller (140) for discriminating a current location of the mobile object in response to the navigation messages received by the GPS receiver and a travel state detection signal of the mobile object detected by the sensor (120) and controllably matching the discriminated current location of the mobile object to the map data stored in the storage (130) for display, and controlling the guidance of the travel of the mobile object via voice guidance signal, a display unit (150) for displaying a map and the current location of the mobile object in response to a control of the controller (140), a voice guidance signal output unit (170) for outputting a voice guidance signal via a speaker (160) in response to the control of the controller (140) for guidance, and an instruction input unit (180) for inputting to the controller (140) an operation instruction in response to manipulation of a user.

In the navigation system thus constructed, if a user manipulates the instruction input unit (180) to instruct a search of a travel route, the controller (140) inputs a start location and destination of the mobile object via the instruction input unit (180). If the start location and the destination of the mobile object are input, the controller (140) reads a predetermined map data including the start location and the destination from the map data storage (130). A search is made from the read map data about a travel route including the shortest distance from the start location to the destination, and highway priority and the like, and the searched travel route is displayed on the display unit (150) for the user to check.

When the mobile object starts to travel following the searched travel route of the mobile object, the navigation messages transmitted by the GPS satellites are received by the GPS receiver (110) via the antenna (100) and inputted to the controller (140). A travel state of the mobile object is detected by the sensor (120) to output a travel state detection signal, which is inputted to the controller (140).

The controller (140) discriminates the current location of the mobile object in response to the received navigation messages and the travel state detection signal of the mobile object. The controller (140) matches the discriminated current location of the mobile object to the map data read from the map data storage (130) and outputs to the display unit (150) to display the current location of the mobile object along with the map.

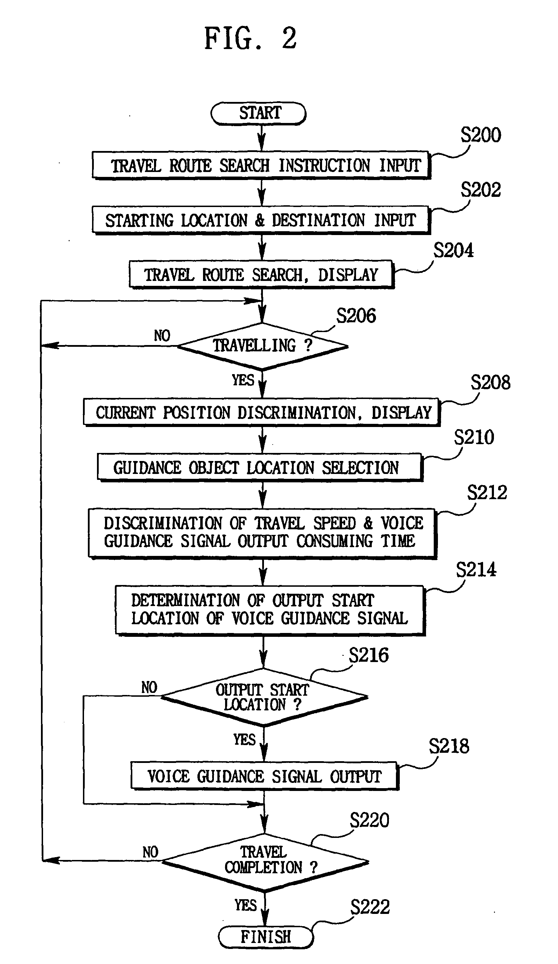

Furthermore, the controller (140) discriminates whether there exists a predetermined guidance object location such as a cross road, an interchange or the like in front of the traveling mobile object. As a result of the discrimination, if there exist the predetermined guidance object location, the controller (140) determines an output completion location of the voice guidance signal predetermined relative to the guidance object location by the searched guidance object location and the voice guidance signal to be outputted; discriminates a current travel speed of a mobile object and a time consumed for outputting a voice guidance signal; calculating a travel distance the mobile object can travel during the output consuming time by multiplying the discriminated current travel speed of the mobile object by the output consuming time; and determins as an output start position of the voice guidance signal a location where the calculated travel distance of the mobile object is added by an output finish position of the voice guidance signal predetermined relative to the guidance object location. The controller (140) discriminates whether the mobile object has passed the output start location of the voice guidance signal, and if the mobile object has not passed the output start location of the voice guidance signal, the controller (140) does not output a relevant voice guidance signal, and if the mobile object has passed a relevant output start location, the controller (140) controls the voice guidance signal output unit (170) to start to output a voice guidance signal relative to the relevant guidance object location via the speaker (160), and completes the outputting of the voice guidance signal before the mobile object passes the guidance object location.
Meanwhile, FIG.2 is a signal flow chart illustrating a voice guidance method according to the present invention.

Referring to FIG.2, when a search instruction of the travel route is inputted from the instruction input unit (180) at S200, the controller (140) inputs a start location and a destination of the mobile object from the instruction input unit (180) (S202).

The start location of the mobile object may be set up as a current location of the mobile object searched by the mixed navigation method using the navigation messages received by the GPS receiver (110) and the travel state detection signal detected by the sensor (120). In other words, the GPS receiver (110) receives the navigation messages and the received navigation messages are used to output a value of Dilution of Precision (DOP). When a GPS receiver detects a mobile object by receiving navigation messages transmitted by a plurality of GPS satellites, DOP as geometrical error is produced according to the relationship of arrangement between the GPS satellites, which have transmitted the navigation messages received by the GPS receiver with respect to the position of the GPS receiver. The value of DOP becomes small if the GPS satellites are arranged uniformly with respect to the position of the GPS receiver, but large if the GPS satellites are not arranged uniformly. Therefore, the controller (140) discriminates the credibility of the navigation messages based on the value of the DOP. If the value of DOP is less than a predetermined threshold, it is discriminated by the controller (140) that there is credibility, and detects the current location of the mobile object. If the value of DOP is equal to or greater than a predetermined threshold, the controller (140) discriminates that there is no credibility. If there is no credibility, the controller (140) detects a current location of the mobile object by using a detection signal of the sensor (120) based on a final location of the mobile object detected by the navigation messages having credibility. The current location of the mobile object thus detected is set up as a start location of the mobile object.

Once the start location and destination are determined, the controller (140) uses the map data stored in the map data storage (120) to search a travel route of the mobile object from the start location to the destination, and allows the travel route to be displayed on the display unit (150) for checks by a user (S204).

Successively, discrimination is made as to whether the mobile object is moving (S206). If the mobile object is moving, the controller (140) discriminates a current location of the mobile object by way of the mixed navigation method using the navigation messages received by the GPS receiver (110) and the travel state detection signal of the mobile object detected by the sensor (120) (S206). The current location of the mobile object thus discriminated is matched to the map data stored in the map data storage (130) and outputted to the display unit (150) for display thereon.

The-controller (140) searches a guidance object location situated in front of the traveling mobile object. In other words, the controller (140) searches the guidance object location situated at a location nearest to the front of the traveling mobile object from the current location on the searched travel route of the mobile object (S210). Successively, the controller (140) discriminates a current travel speed of the mobile object in response to the detection signal of the sensor (120), and discriminates a time to be consumed for outputting a voice guidance signal relative to the guidance object location thus searched (S212).

The controller (140) then uses the discriminated travel speed of the mobile object and the time to be consumed for outputting the voice guidance signal to determine a start location for starting an output of the voice guidance signal (S214). Now, an operation of determining the start location for outputting the voice guidance signal at S214 will be described in detail.

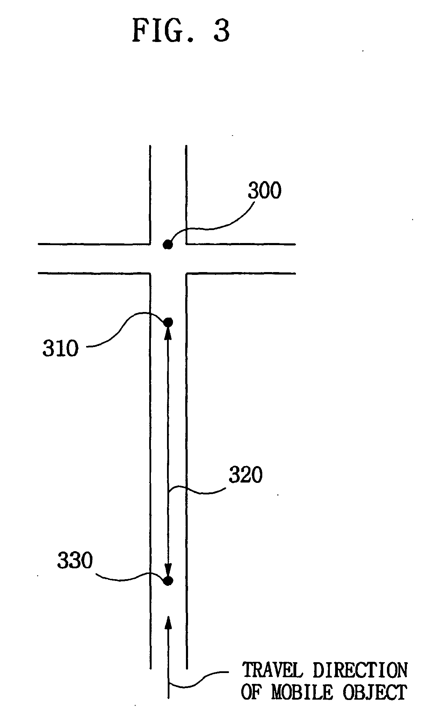

Referring to FIG.3, under the assumption that right turn, left turn and going straight of the mobile object at a cross road is guided by a voice signal, the controller (140) discriminates an output completion location (310) of a prearranged voice guidance signal relative to left turn, right turn or going straight. For example, if the mobile object is guided to left turn or right turn, a location 30 meters ahead of a cross road (310) is discriminated as the output completion location (310) of the voice guidance signal. If going straight of the mobile object is guided, a location 10 meters ahead of the cross road is discriminated as an output completion location of the voice guidance signal.

Thereafter, the controller (140) discriminates a current travel speed of the mobile object in response to a detection signal of the sensor (120), and discriminates a time to be consumed for outputting the voice guidance signal at relevant guidance object location. A travel distance (320) of the mobile object for completion of output of the voice guidance signal is calculated by multiplying the discriminated current travel speed of the mobile object by the time to be consumed for outputting the voice guidance signal. The calculated travel distance (320) of the mobile object is added by the output completion location (310) of the voice guidance signal to determine an output start location (330) for starting the output of the voice guidance signal.

When the output start location (330) of the voice guidance signal is determined as described above, the controller (140) discriminates whether the mobile object passes the output start location (330) of the voice guidance signal (S216). As a result of the discrimination at S216, if the mobile object has not passed the output start location (330) of the voice guidance signal, the controller (140) does not output a relevant voice guidance signal.

As a result of the discrimination at S216, if the mobile object has passed the output start location (330) of the voice guidance signal, the controller (140) controls the voice guidance signal output unit (170) (S218), whereby the voice guidance signal output unit (170) outputs a relevant voice guidance signal relative to a relevant guidance object location.

In other words, the present invention is such that, when a mobile object passes an output start location (330) of a voice guidance signal, a voice guidance signal output unit (170) starts to output a relevant voice guidance signal relative to a cross road (300) in response to the control of a controller (140), and when the mobile object passes an output completion location (310) of the voice guidance signal, an output of the voice guidance signal is completed, whereby a user of the mobile object can listen to all the voice guidance signal before the mobile object passes a cross road (30) and can steer the mobile object to a precise direction at the cross road (300).

Discrimination is made at S220 as to whether the mobile object has completed a travel to the destination. As a result of the discrimination at S220, if the mobile object has not completed the travel, flow returns to S206 to discriminate a current location relative to the travel of the mobile object and to display the current location on the display unit (150) along with the map.
A next guidance object location is selected to determine the output start location (330) of the voice guidance signal, and if the mobile object passes the output start location of the determined voice guidance signal, the voice guidance signal output unit (170) is made to repeat a controlling operation of outputting a relevant guidance voice.

Furthermore, as a result of the discrimination at S220, if the mobile object has completed the travel to the destination, the controller (140) finishes all the operations for guiding the travel of the mobile object

Meanwhile, although the present invention has been illustrated and described in connection with the preferred embodiment, it will be readily understood by those skilled in the art that various adaptations and changes can be made thereto without departing from the scope of the present invention defined by the appended claims.

As apparent from the foregoing, there are advantages in the voice guidance method of travel route in navigation system thus described according to the present invention in that a current travel speed of a mobile object and a time consumed for outputting a voice guidance signal to be outputted at guidance object location are used to determine an output start location of the voice guidance signal, and if the mobile object has passed the determined output start location, the voice guidance signal is outputted, such that a travel direction can be precisely guided via voice signal at a guidance object location before the mobile object passes the guidance object location, and a user of the mobile object can steer the mobile object to a precise direction at the guidance object location.

## Claims

1. A voice guidance method of travel route in a navigation system comprising:
- discriminating (S208) a current location of a mobile object to search for a guidance object location (300),
- detecting (S212) a current travel speed of the mobile object,
- calculating a travel distance (320) in which the mobile object travels at - the current travel speed during an output consumed time of the voice guidance signal,
- determining (S214) an output start location (330) for starting an output of the voice guidance signal using the calculated distance (320), and
- outputting (S218) the voice guidance signal relative to the relevant guidance object location (300) when the mobile object passes the determined output start location (330),
- wherein the determining step of the output start location comprises:
- determining an output completion location (310) of the voice guidance signal predetermined relative to the searched guidance object location and the voice guidance signal to be outputted;
- detecting a time for outputting a voice guidance signal;
- calculating the travel distance (320) to be covered by the mobile object during the output consumption time of the voice guidance signal by multiplying the detected current travel speed of the mobile object by the output consumption time; and
- determining the output start location (330) of the voice guidance signal such that:
- the output start location (330) + the calculated travel distance (320) of the mobile object = the output completion location (310) of the voice guidance signal.

2. The method as defined in claim 1, wherein the current location of the mobile object is a location of the mobile object searched by a mixed navigation method using navigation messages received by a GPS receiver and a travel state detection signal of the mobile object detected by a sensor installed at the mobile object.

3. The method as defined in claim 1, wherein search of the guidance object location (300) is to search one of the guidance object locations situated nearest to a forward location of the mobile object from the current location out of a plurality of guidance object locations located on the searched travel route.

4. The method as defined in any one of claims 1 to 3, further comprising:
searching a travel route to a destination from a starting point of the mobile object, discriminating a current location of the mobile object to guide the mobile object to travel along the searched route when the mobile object is moving, and searching a guidance object location.

5. The method as defined in claim 4, wherein the start location of the mobile object is a current location of the mobile object searched by a mixed navigation method using navigation messages received by a GPS receiver and a travel state detection signal of the mobile object detected by a sensor installed at the mobile object.

6. The method as defined in any one of claims 4 or 5, wherein the start location and a destination of the mobile object are locations inputted by a user via an instruction input unit.

## Patentansprüche

1. Sprachführungsverfahren einer Reiseroute in einem Navigationssystem, umfassend:
• Ermitteln (S208) eines momentanen Ortes eines mobilen Objekts, um nach einem Führungszielort (300) zu suchen;
• Erfassen (S212) einer momentanen Reisegeschwindigkeit des mobilen Objekts;
• Berechnen einer Reisedistanz (320), in der das mobile Objekt bei der momentanen Reisegeschwindigkeit während einer zur Ausgabe des Sprachführungssignals erforderlichen Zeit reist;
• Bestimmen (S214) eines Ausgabeanfangsortes (330) zum Anfangen einer Ausgabe des Sprachführungssignals unter Verwendung der berechneten Distanz (320), und
• Ausgeben (S218) des Sprachführungssignals relativ zu dem relevanten Führungszielort (300), wenn das mobile Objekt den bestimmten Ausgabeanfangsort (330) passiert,
• wobei der Bestimmungsschritt des Ausgabeanfangsortes umfasst:
• Bestimmen eines Ausgabevollendungsortes (310) des Sprachführungssignals, der relativ zu dem gesuchten Führungszielort und dem auszugebenden Sprachführungssignal vorbestimmt ist;
• Erfassen einer Zeit zum Ausgeben eines Sprachführungssignals;
• Berechnen der Reisedistanz (320), die durch das mobile Objekt während der zur Ausgabe des Sprachführungssignals erforderlichen Zeit zurückzulegen ist, durch Multiplizieren der erfassten momentanen Reisegeschwindigkeit des mobilen Objekts mit der erforderlichen Ausgabezeit; und
• Bestimmen des Ausgabeanfangsortes (330) des Sprachführungssignals derart, dass:
• der Ausgabeanfangsort (330) + die berechnete Reisedistanz (320) des mobilen Objekts = der Ausgabevollendungsort (310) des Sprachführungssignals.

2. Verfahren gemäß Anspruch 1, wobei der momentane Ort des mobilen Objekts ein Ort des mobilen Objekts ist, der durch ein gemischtes Navigationsverfahren unter Verwendung von durch einen GPS-Empfänger empfangenen Navigationsnachrichten und eines Reisezustandserfassungssignals des mobilen Objekts gesucht wird, wobei das Reisezustandserfassungssignal durch einen bei dem mobilen Objekt angebrachten Sensor erfasst wird.

3. Verfahren gemäß Anspruch 1, wobei eine Suche nach dem Führungszielort (300) in einem Suchen nach einem der Führungszielorte besteht, der einem vorwärtsliegenden Ort des mobilen Objekts von dem momentane Ort am nächsten ist, aus einer Vielzahl von auf der gesuchten Reiseroute befindlichen Führungszielorten.

4. Verfahren gemäß zumindest einem der Ansprüche 1 bis 3, ferner umfassend:
Suchen einer Reiseroute zu einem Ziel von einem Anfangspunkt des mobilen Objekts aus, Ermitteln eines momentanen Ortes des mobilen Objekts, um das mobile Objekt zu einem Reisen entlang der gesuchten Route zu führen, wenn sich das mobile Objekt bewegt, und Suchen eines Führungszielorts.

5. Verfahren gemäß Anspruch 4, wobei der Anfangsort des mobilen Objekts ein momentaner Ort des mobilen Objekts ist, der durch ein gemischtes Navigationsverfahren unter Verwendung von durch einen GPS-Empfänger empfangenen Navigationsnachrichten und eines Reisezustandserfassungssignals des mobilen Objekts gesucht wird, wobei das Reisezustandserfassungssignal durch einen bei dem mobilen Objekt angebrachten Sensor erfasst wird.

6. Verfahren gemäß zumindest einem der Ansprüche 4 oder 5, wobei der Anfangsort und ein Ziel des mobilen Objekts Orte sind, die durch einen Benutzer über eine Anweisungseingabeeinheit eingegeben werden.

## Revendications

1. Procédé de guidage vocal d'itinéraire dans un système de navigation comprenant:
- la discrimination (S208) d'une localisation courante d'un objet mobile pour rechercher une localisation d'objet de guidage (300),
- la détection (S212) d'une vitesse de déplacement courante de l'objet mobile,
- le calcul d'une distance de déplacement (320) sur laquelle l'objet mobile se déplace à la vitesse de déplacement courante pendant un temps écoulé de sortie du signal de guidage vocal,
- la détermination (S214) d'une localisation de départ de sortie (330) pour démarrer une sortie du signal de guidage vocal en utilisant la distance (320) calculée, et
- la délivrance en sortie (S218) du signal de guidage vocal se rapportant à la localisation d'objet de guidage (300) pertinent lorsque l'objet mobile passe la localisation de départ de sortie (330) déterminée,
- dans lequel l'étape de détermination de la localisation de départ de sortie comprend:
- la détermination d'une localisation de fin de sortie (310) du signal de guidage vocal prédéterminé par rapport à la localisation d'objet de guidage recherchée et au signal de guidage vocal devant être délivré en sortie;
- la détection d'un moment pour délivrer en sortie un signal de guidage vocal;
- le calcul de la distance de déplacement (320) devant être couverte par l'objet mobile pendant le temps écoulé de sortie du signal de guidage vocal en multipliant la vitesse de déplacement courante détectée de l'objet mobile par le temps écoulé de sortie; et
- la détermination de la localisation de départ de sortie (330) du signal de guidage vocal de telle manière que:
- la localisation de départ de sortie (330) + la distance de déplacement (320) calculée de l'objet mobile = la localisation de fin de sortie (310) du signal de guidage vocal.

2. Procédé selon la revendication 1, dans lequel la localisation courante de l'objet mobile est une localisation de l'objet mobile recherchée par un procédé de navigation mixte utilisant des messages de navigation reçus par un récepteur GPS et un signal de détection d'état de déplacement de l'objet mobile détecté par un capteur installé dans l'objet mobile.

3. Procédé selon la revendication 1, dans lequel la recherche de la localisation d'objet de guidage (300) consiste à rechercher une des localisations d'objet de guidage située au plus près d'une localisation suivante de l'objet mobile par rapport à la localisation courante parmi une pluralité de localisations d'objet de guidage situées sur l'itinéraire recherché.

4. Procédé selon l'une quelconque des revendications 1 à 3, comprenant en outre:
la recherche d'un itinéraire jusqu'à une destination à partir d'un point de départ de l'objet mobile, la discrimination d'une localisation courante de l'objet mobile pour guider l'objet mobile pour qu'il se déplace sur l'itinéraire recherché lorsque l'objet mobile se déplace, et la recherche d'une localisation d'objet de guidage.

5. Procédé selon la revendication 4, dans lequel la localisation de départ de l'objet mobile est une localisation courante de l'objet mobile recherchée par un procédé de navigation mixte utilisant des messages de navigation reçus par un récepteur GPS et un signal de détection d'état de déplacement de l'objet mobile détecté par un capteur installé dans l'objet mobile.

6. Procédé selon l'une quelconque des revendications 4 ou 5, dans lequel la localisation de départ et une destination de l'objet mobile sont des localisations entrées par un utilisateur par l'intermédiaire d'une unité d'entrée d'instructions.
